# NEUE EUROPÄISCHE PATENTSCHRIFT

(11) **EP 3 810 700 B2**
(45) Veröffentlichungstag und Bekanntmachung des Hinweises auf die Entscheidung über den Einspruch: **29.07.2026**
(45) Hinweis auf die Patenterteilung: 02.08.2023
(21) Anmeldenummer: 19732343.9
(22) Anmeldetag: 19.06.2019
(51) Int. Cl.: C09D 5/00

(54) **DISPERSIONSFARBE**
DISPERSION PAINT
PEINTURE DISPERSION

(30) Priorität: 22.06.2018 DE 102018004944
(43) Veröffentlichungstag der Anmeldung: 28.04.2021
(60) Teilanmeldung: 23188287.9
(73) Patentinhaber: Brillux GmbH & Co. KG, 48163 Münster (DE)
(72) Erfinder: HÖRSTING, Ingo, 48317 Drensteinfurt (DE); HERTEL, Patrick, 48149 Münster (DE); LEUSMANN, Jan, 48301 Nottuln (DE); FRERICK, Sebastian, 48155 Münster (DE); BENDER, Georg, 49134 Wallenhorst (DE)
(74) Vertreter: Cohausz & Florack
(86) Internationale Anmeldenummer: PCT/EP2019/066163
(87) Internationale Veröffentlichungsnummer: WO 2019/243407

(56) Entgegenhaltungen:
- WO-A1-2008/081036
- WO-A1-2016/074186
- DE-A1- 102014 012 020
- FR-A1- 2 907 789
- US-A- 3 892 791
- ANONYMOUS: "Stabilizers for biocide-free mineral paints - DISPERSOGEN® SPS/SPG", CLARIANT, 20 February 2017 (2017-02-20), XP093189673
- Sicherheitdatenblatt
- Datenblatt Mowilith LDM 1828

## Beschreibung

Die vorliegende Erfindung betrifft eine Dispersionsfarbe, ein Verfahren zur Herstellung der Dispersionsfarbe sowie die Verwendung der Dispersionsfarbe.

Für die Beschichtung von Untergründen sind verschiedene Beschichtungsmittel bekannt. Neben Silikatfarben gibt es unter anderem Dispersions-Silikatfarben und Kunststoffdispersionsfarben.

Silikatfarben sind zweikomponentige Farben, die keine organischen Bestandteile enthalten. Die beiden Hauptkomponenten der Silikatfarben sind Wasserglas und ein wasserglasbeständiges Pigment. Silikatfarben werden üblicherweise unmittelbar vor dem Aufbringen durch Zusammengeben der beiden Hauptkomponenten angerührt. Daher erfordern Silikatfarben mehrere Arbeitsschritte, und ihre Verarbeitung ist allgemein schwierig und erfordert viel Erfahrung.

In den Dispersions-Silikatfarben nach DIN 18363 sind zusätzlich zum Wasserglas und dem wasserglasbeständigen Pigment noch bis zu 5 Gew.-% organische Bestandteile, bezogen auf die Gesamtmenge an Dispersions-Silikatfarbe, enthalten. Als organische Bestandteile werden vor allem Kunstharzdispersionen verwendet. Zusätzlich können auch weitere Stoffe wie Hydrophobierungsmittel enthalten sein. Durch den Einsatz von Kunstharzdispersionen ist es möglich, die Dispersions-Silikatfarben als Einkomponentensysteme anzubieten.

Sowohl Silikatfarben als auch Dispersions-Silikatfarben weisen üblicherweise einen sehr stark alkalischen pH Wert von bis zu 13 auf, der aufwändigere Vorkehrungen bezüglich des Arbeitsschutzes erfordert.

Kunststoffdispersionsfarben, auch bekannt als Dispersionsfarben, enthalten üblicherweise relativ große Mengen an organisch-chemischen Bestandteilen, insbesondere an Kunstharzen wie Polymere, insbesondere in Form von Kunstharzdispersionen. Um eine ausreichende Lagerstabilität zu gewährleisten, benötigen Dispersionsfarben üblicherweise Konservierungsmittel, insbesondere Biozide, wie Isothiazoline. Diese können jedoch insbesondere bei Allergikern Reizungen und Hautirritationen hervorrufen.

Um Kunststoffdispersionsfarben bereitzustellen, die ohne Konservierungsmittel auskommen, sind verschiedene Möglichkeiten vorgeschlagen worden. Diese Möglichkeiten basieren insbesondere auf Wasserglas und Alkylsilikonaten.

Die EP 1 297 079 B1 beschreibt eine Dispersionsfarbe enthaltend Polymerdispersion, Pigment und/oder Füllstoff, Wasserglas und Wasser. Diese Dispersionsfarbe zeichnet sich dadurch aus, dass sie keine Konservierungsmittel benötigt. Jedoch ist durch das Vorhandensein von Wasserglas zusätzlich ein anorganisches Bindemittel enthalten, wodurch die Eigenschaften der Dispersionsfarbe, insbesondere ihre Verarbeitbarkeit, beeinträchtigt werden können.

Die DE 1 031 910 B beschreibt eine Alkydharzemulsionsfarbe enthaltend Titandioxid, Füllstoffe, ein Alkydharz und Wasser. Dieser Farbe wird umittelbar vor der Anwendung Natriummethylsilikonat zugegeben, wodurch die modifizierte Farbe bessere Abwascheigenschaften aufweist als Alkydharzemulsionsfarben ohne Natriummethylsilikonat. Die DE 1 031 910 B macht keine Aussage über den pH Wert der Alkydharzemulsionsfarbe, ihre Lagerstabilität oder über das Vorhandensein von Konservierungsmitteln. Weiterhin ist eine Alkydharzemulsionsfarbe enthaltend Natriummethylsilikonat zur Lagerung nach der DE 1 031 910 B nicht vorgesehen.

Die DE 10 2014 013 455 A1 und die DE 10 2016 002 221 A1 beschreiben jeweils eine Dispersionsfarbe enthaltend ein Polymer, Pigment, Füllstoff, Alkylsilikonat und Wasser. In beiden Dokumenten wird beschrieben, dass die Dispersionsfarbe einen alkalischen pH Wert von maximal 12 aufweist. Keines der vorgenannten Dokumente beschreibt, dass die Dispersionsfarbe durch Verwendung eines Alkanolamins stabilisiert werden kann. Nachteilig an den vorstehend beschriebenen Dispersionsfarben enthaltend Alkylsilikonat ist, dass es bei einigen ungeeigneten Polymeren und Titandioxidvarianten zu einer Vergilbung kommen kann. Als nachteilig im farbigen Bereich kann sich ferner die Bildung von weißem Kaliumcarbonat auswirken, welches durch Reaktion mit Kohlendioxid entstehen kann. Hinzu kommt, dass Alkylsilikonate relativ teuer sind.

Ferner ist die Verwendung von N-Alkylalkanolaminen und/oder N,N-Dialkylalkanolaminen als Synergist in Kombination mit einem Biozid zur Stabilisierung von Latexzusammensetzungen aus der EP 1 362 897 A2 bekannt. Die EP 1 362 897 A2 beschreibt jedoch keine Latexzusammensetzungen, die N-Alkylalkanolaminen und/oder N,N-Dialkylalkanolaminen ohne Biozid enthalten.

Weiter beschreibt die DE 10 2014 012 020 A1 eine Dispersion enthaltend (A) mindestens eine Verbindung der Formel (R¹NCH₃)CH₂(CHOH)₄CH₂OH, worin R¹ H, C₁-C₄-Alkyl, CH₂CH₂OH oder CH₂CH(CH₃)OH bedeutet, (B) einen polymeren Binder und (C) Wasser.

Die WO 2016/074186 A1 beschreibt eine Dispersion von Polymerpartikeln umfassend, als polymerisierte Einheiten, in Trockengewicht, bezogen auf das Gesamttrockengewicht der Polymerpartikel, von 85% bis 99,9% ethylenisch ungesättigte nichtionische Monomere, von 0,01% bis 4% phosphorhaltige (Meth)acrylatmonomere und mindestens einen Neutralisator.

Die WO 2008/081036 A1 beschreibt Latexfarbformulierungen, die mindestens ein N-Alkyldialkanolamin als Neutralisationsmittel enthalten sowie Verfahren für deren Verwendung.

Die FR 2 907 789 A1 beschreibt die Verwendung von 2-n-Butylaminoethanol als Neutralisations- und/oder Co-Dispergiermittel in einer Farbe und/oder als Mittel zur Entwicklung der Farbstärke von Pigmente(en) in einer weißen Farbbasis, die man abtönen möchte.

Die US 3 892 791 A beschreibt ein Titanchelat, das das Reaktionsprodukt eines Titanortheesters, eines Glykols oder Glykolethers und eines Alkanolamins ist.

Ausgehend vom voranstehend erläuterten Stand der Technik bestand eine Aufgabe der Erfindung darin, eine Dispersionsfarbe bereitzustellen, die im Wesentlichen frei von Konservierungsmitteln ist, eine gute Lagerstabilität aufweist und/oder gut verarbeitbar ist.

Alle oder einige dieser Aufgaben werden erfindungsgemäß durch die Dispersionsfarbe nach Anspruch 1, das Verfahren nach Anspruch 12 sowie die Verwendung nach Anspruch 14 gelöst.

Vorteilhafte Ausgestaltungen der Erfindung sind in den abhängigen Ansprüchen angegeben und werden nachfolgend im Einzelnen erläutert.

Die erfindungsgemäße Dispersionsfarbe weist einen pH Wert von 10 bis 12 auf und enthält, jeweils bezogen auf das Gesamtgewicht der Dispersionsfarbe, folgende Bestandteile:
a. 0 bis 25 Gew.-% Pigment,
b. 20 bis 50 Gew.-% Füllstoff,
c. 1 bis 25 Gew.-% Polymer,
d. 0,01 bis 5 Gew.-% Alkanolamin,
e. 25 bis 70 Gew.-% Wasser,
wobei die Dispersionsfarbe im Wesentlichen frei von Konservierungsmittel ist und wobei der pH Wert der Dispersionsfarbe im verschlossenen Behälter bei 22°C über einen Zeitraum von mindestens 4 Wochen im Wesentlichen konstant bleibt, und wobei die Dispersionsfarbe frei von Wasserglas ist.

Überraschend hat sich gezeigt, dass durch Kombination von 0 bis 25 Gew.-% Pigment mit 20 bis 50 Gew.-% Füllstoff, 1 bis 25 Gew.-% Polymer, 0,01 bis 5 Gew.-% Alkanolamin und 25 bis 70 Gew.-% Wasser in einer Dispersionsfarbe mit einem pH Wert von 10 bis 12 eine Dispersionsfarbe erhalten wird, in der die Komponenten eine ausgezeichnete Kompatibilität untereinander aufweisen. Dadurch haben Oberflächen, die mit der erfindungsgemäßen Dispersionsfarbe beschichtet wurden, ein homogeneres Aussehen. Dies äußert sich insbesondere darin, dass die Oberflächen, die mit der erfindungsgemäßen Dispersionsfarbe beschichtet wurden, sich sehr gleichmäßig durch guten Verlauf darstellen. Dadurch lässt sich die erfindungsgemäße Dispersionsfarbe hervorragend verarbeiten und weist eine lange Offenzeit auf. Weiterhin hat sich gezeigt, dass die erfindungsgemäße Dispersionsfarbe auch ohne Konservierungsmittel nach einer Lagerzeit von mehreren Wochen keine Verfärbungen aufweist. Schließlich wurde gefunden, dass der pH Wert der erfindungsgemäßen Dispersionsfarbe über eine Lagerzeit von mehreren Wochen im Wesentlichen konstant blieb.

Ohne an eine bestimmte Theorie gebunden sein zu wollen, scheint das Alkanolamin zum Einen die Dispersionsfarbe, insbesondere den pH Wert der Dispersionsfarbe, zu stabilisieren und zum Anderen für eine gute Kompatibilität der Komponenten zu sorgen. Im Unterschied zu im Stand der Technik bekannten konservierungsmittelfreien Dispersionsfarben verzichtet die erfindungsgemäße Dispersionsfarbe auf die anorganischen Komponenten Wasserglas, was beim erfindungsgemäßen pH Wert der Dispersionsfarbe die Kompatibilität zwischen den Komponenten zu verbessern scheint.

Das Alkanolamin scheint in der erfindungsgemäßen Dispersionsfarbe als pH Wert Puffer zu wirken. Dadurch scheint das Alkanolamin eine bessere Lagerstabilität der Dispersionsfarbe zu bewirken. Diese Wirkung war angesichts der Verwendung von Alkanolaminen als Synergist für Biozide, wie in EP 1 362 897 A2 beschrieben, nicht vorhersehbar.

Als Dispersionsfarben im Sinne der Erfindung kommen insbesondere Dispersions-Innenfarben, Dispersions-Außenfarben, Silikonharzfarben sowie Putze und Bautenlacke auf Dispersionsbasis, einschließlich Innen- und Außenputzen, in Betracht.

Das Alkanolamin ist in der erfindungsgemäßen Dispersionsfarbe in einer Menge von 0,01 bis 5 Gew.-% enthalten, bezogen auf das Gesamtgewicht der Dispersionsfarbe. Bevorzugt enthält die erfindungsgemäße Dispersionsfarbe 0,05 bis 3 Gew.-%, insbesondere 0,1 bis 1,5 Gew.-%, Alkanolamin, jeweils bezogen auf das Gesamtgewicht der Dispersionsfarbe. Dispersionsfarben mit diesen Gehalten zeigen eine gute Verarbeitbarkeit und eine gute Lagerstabilität.

Alkanolamine gemäß der Erfindung sind insbesondere Verbindungen mit der Formel

R¹R²N(CH₂)ₗ(CR³R⁴)ₘ(CH₂)ₙOH,

wobei
R¹ und R² unabhängig voneinander H, ein Kohlenwasserstoffrest mit 1 bis 10 Kohlenstoffatomen oder HO(CH₂)₂- bedeuten,
R³ und R⁴ unabhängig voneinander H, OH oder C₁-C₅-Alkyl bedeuten, 10 oder 1 ist,
m eine ganze Zahl von 1 bis 5 ist, und
n eine ganze Zahl von 1 bis 5 ist.

Vorzugsweise bedeuten in der Formel R¹R²N(CH₂)ₗ(CR³R⁴)ₘ(CH₂)ₙOH R¹ H oder Methyl und R² H, C₁-C₁₀-Alkyl oder HO(CH₂)₂- und R³ und R⁴ unabhängig voneinander H, OH oder Methyl,
l ist 0 oder 1,
m ist eine ganze Zahl von 1 bis 5, und
n ist 1.

Weiter bevorzugt bedeuten in der Formel R¹R²N(CH₂)ₗ(CR³R⁴)ₘ(CH₂)ₙOH R¹ H oder Methyl und R² H, Methyl oder Butyl, insbesondere n-Butyl und R³ und R⁴ unabhängig voneinander H, OH oder Methyl,
l ist 0 oder 1,
m ist eine ganze Zahl von 1 bis 5, und
n ist 1.

Das Akanolamin kann ein oder mehrere Alkanolamine enthalten oder daraus bestehen. Insbesondere kann das Alkanolamin eine einzige Verbindung, die unter die oben genannte Formel für das Alkanolamin fällt, oder eine Mischung von zwei oder mehr Verbindungen, die unter die oben genannte Formel für das Alkanolamin fallen, enthalten oder daraus bestehen.

Gemäß einer Ausführungsform der Erfindung besteht das Alkanolamin aus einer einzigen Verbindung, die unter die oben genannte Formel für das Alkanolamin fällt.

Gemäß einer weiteren Ausführungsform der Erfindung besteht das Alkanolamin aus einer Mischung von zwei oder mehr Verbindungen, die unter die oben genannte Formel für das Alkanolamin fallen.

Vorzugsweise ist das Alkanolamin ausgewählt aus der Gruppe bestehend aus 2-(n-Butylamino) ethanol, 2-Dimethylamino-2-methylpropanol, 2-Aminoethanol, 2-Amino-2-methylpropanol, N,N-Dimethylglucamin und Mischungen davon. Weiter bevorzugt enthält das Alkanolamin 2-(n-Butylamino)ethanol, 2-Dimethylamino-2-methylpropanol, N,N-Dimethylglucamin oder Mischungen davon.

Gemäß einer bevorzugten Ausführungsform ist das Alkanolamin 2-(n-Butylamino)ethanol. Gemäß dieser Ausführungsform ist 2-(n-Butylamino)ethanol in der Dispersionsfarbe in einer Menge von weniger als 1 Gew.-%, insbesondere in einer Menge von 0,5 bis 0,99 Gew.-%, enthalten, bezogen auf das Gesamtgewicht der Dispersionsfarbe. Es wurde herausgefunden, dass mit 2-(n-Butylamino)ethanol eine sehr gute Lagerstabilität erreicht werden kann.

Ebenso hat sich herausgestellt, dass mit Mischungen von N,N-Dimethylglucamin mit einem weiteren Alkanolamin ebenfalls sehr gute Lagerstabilitäten erreicht werden können.

Gemäß einer weiteren bevorzugten Ausführungsform ist das Alkanolamin eine Mischung von N,N-Dimethylglucamin und 2-(n-Butylamino)ethanol. Vorzugsweise ist gemäß dieser Ausführungsform 2-(n-Butylamino)ethanol in einer Menge von weniger als 1 Gew.-%, insbesondere in einer Menge von 0,1 bis 0,99 Gew.-%, und N,N-Dimethylglucamin in einer Menge von bis zu 4 Gew.-% in der Dispersionsfarbe enthalten, jeweils bezogen auf das Gesamtgewicht der Dispersionsfarbe.

Gemäß einer weiteren bevorzugten Ausführungsform ist das Alkanolamin eine Mischung von N,N-Dimethylglucamin und 2-Aminoethanol. Vorzugsweise ist gemäß dieser Ausführungsform 2-Aminoethanol in einer Menge von weniger als 1 Gew.-%, insbesondere in einer Menge von 0,1 bis 0,99 Gew.-%, und N,N-Dimethylglucamin in einer Menge von bis zu 4 Gew.-% in der Dispersionsfarbe enthalten, jeweils bezogen auf das Gesamtgewicht der Dispersionsfarbe.

Gemäß einer weiteren bevorzugten Ausführungsform ist das Alkanolamin eine Mischung von N,N-Dimethylglucamin und 2-Amino-2-methylpropanol. Vorzugsweise ist gemäß dieser Ausführungsform 2-Amino-2-methylpropanol in einer Menge von weniger als 1 Gew.-%, insbesondere in einer Menge von 0,1 bis 0,99 Gew.-%, und N,N-Dimethylglucamin in einer Menge von bis zu 4 Gew.-% in der Dispersionsfarbe enthalten, jeweils bezogen auf das Gesamtgewicht der Dispersionsfarbe.

Ist das Alkanolamin der Dispersionsfarbe lediglich eine einzige Verbindung, so ist das Alkanolamin bevorzugt frei von 2-Aminoethanol, Diethanolamin, Triethanolamin, 2-Amino-1-propanol, 2-Amino-2-methylpropanol oder N,N-Dimethylethanolamin, insbesondere von 2-Amino-2-methylpropanol, 2-Aminoethanol, Diethanolamin oder Triethanolamin.

Mit den vorstehend genannten Alkanolaminen, insbesondere mit 2-(n-Butylamino)ethanol oder mit Mischungen von N,N-Dimethylglucamin mit 2-(n-Butylamino)ethanol, 2-Aminoethanol oder 2-Amino-2-methylpropanol, können Dispersionsfarben mit einer guten Lagerstabilität erhalten werden.

Vorzugsweise enthält das Alkanolamin ein Stickstoffatom, insbesondere genau 1 Stickstoffatom. Weiter bevorzugt enthält das Alkanolamin eine Aminogruppe, insbesondere genau eine Aminogruppe.

Gemäß einer Ausführungsform der Erfindung ist die erfindungsgemäße Dispersionsfarbe frei von alkoxyliertem Tetraalkylalkylendiamin und/oder alkoxyliertem (N,N')-Tetraalkylalkylendiamin.

Die erfindungsgemäße Dispersionsfarbe ist frei von Wasserglas.

Gemäß einer Ausführungsform der Erfindung ist die erfindungsgemäße Dispersionsfarbe frei von Wachs.

Vorzugsweise enthält die erfindungsgemäße Dispersionsfarbe ferner Pigment. Bei Verwendung von bestimmten Füllstoffen wie Calciumcarbonat kann jedoch auch auf Pigment verzichtet werden. Vorzugsweise enthalten Dispersionsfarben jedoch Pigment, um ein gutes Deckvermögen und eine gute Nassabriebbeständigkeit zu gewährleisten. Vor allem aus wirtschaftlichen Gründen kann ein Verzicht auf Pigment jedoch angezeigt sein. Die erfindungsgemäße Dispersionsfarbe kann bis zu 25 Gew.-% Pigment enthalten, bezogen auf das Gesamtgewicht der Dispersionsfarbe. Das Vorhandensein von Pigment erhöht die Deckkraft der Dispersionsfarbe und/oder sorgt für einen Farbeindruck. Als Pigment kommen verschiedene Substanzen in Frage. Bevorzugt ist das Pigment ausgewählt aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon. Bevorzugt ist das Pigment Titandioxid. Gemäß einer bevorzugten Ausführungsform der Erfindung enthält die Dispersionsfarbe 1 bis 25 Gew.-%, bevorzugt 1 bis 20 Gew.-%, weiter bevorzugt 1 bis 15 Gew.-% Pigment, besonders bevorzugt 5 bis 15 Gew.-% Pigment, jeweils bezogen auf das Gesamtgewicht der Dispersionsfarbe.

Gemäß einer Ausführungsform werden bevorzugt anorganische Pigmente eingesetzt. Beispiele für anorganische Pigmente sind Oxide wie Titandioxid, Eisenoxide, z.B. P.Y. 42, P.R. 101, P.Bk. 11, Chromoxidgrün, z.B. P.G. 17, Mischphasenpigmente z.B. Cobaltoxide Blau P.B. 28 und Grün P.G. 50, Bismutvanadat P.Y. 184, Rutil-Zinn-Zink P.O. 216, Silikate, z.B. Ultramarinblau P.B. 29 und Kohlenstoff, z.B. Ruß P.Bk. 7.

Gemäß einer weiteren Ausführungsform werden bevorzugt organische Pigmente eingesetzt. Beispiele für organische Pigmente sind Azopigmente, z.B. Arylidgelb (Monoazo) P.Y. 74, Polycyclische Pigmente, z.B. Chinacridone P.R. 122, Perinone P.O. 43, Pyrazolo-Chinazolon P.O. 67, Diketo-Pyrrolo-Pyrrol (DPP) P.R. 254, Dioxazine P.V. 23 und Metallkomplexpigmente, z.B. Kupferphthalocyanine Blau P.B. 15:3 und Grün P.G. 7.

Die für die Beispiele verwendeten Bezeichnungen der anorganischen und organischen Pigmente entsprechen den Generic Names des Colour Index der British Society of Dyers and Colourists.

Gemäß einer weiteren Ausführungsform werden Mischungen von anorganischen und organischen Pigmenten eingesetzt.

Durch die Verwendung der angeführten Pigmente können farbige Dispersionsfarben hergestellt werden, die im Wesentlichen das ganze Farbspektrum abdecken.

Die erfindungsgemäße Dispersionsfarbe enthält ferner Füllstoff. Vorzugsweise enthält die erfindungsgemäße Dispersionsfarbe Füllstoff in einer Menge von 20 bis 50 Gew.%, insbesondere 20 bis 35 Gew.% oder 20 bis 30 Gew.%, jeweils bezogen auf das Gesamtgewicht der Dispersionsfarbe. Bevorzugt ist der Füllstoff ausgewählt aus der Gruppe bestehend aus Dolomit, Bariumsulfat, Feldspat, Quarz, Calciumcarbonat, Glimmer, Kaolin, kalziniertes Kaolin, Talkum, Diatomeenerde und Mischungen davon. Weiter bevorzugt ist der Füllstoff eine Mischung aus mindestens Calciumcarbonat und kalziniertem Kaolin. Besonders bevorzugt ist der Füllstoff eine Mischung aus Calciumcarbonat, kalziniertem Kaolin und Diatomeenerde. Derartige Füllstoffe ergeben Dispersionsfarben mit einer guten Verarbeitbarkeit.

Calciumcarbonat kann dabei in verschiedener Form, beispielsweise in Form von Kreide oder Calcit eingesetzt werden.

Praktische Versuche haben ergeben, dass Dispersionsfarben, die besonders homogene Beschichtungen ergeben, erhalten werden, wenn die Füllstoffpartikel klein sind. Vorteilhafterweise weisen die Füllstoffpartikel der erfindungsgemäßen Dispersionsfarbe eine Größe von weniger als 100 µm, insbesondere weniger als 80 µm, bevorzugt von 0,1 bis 50 µm, weiter bevorzugt von 1 bis 30 µm auf. Verfahren zur Bestimmung der Partikelgröße sind dem Fachmann bekannt. Beispielsweise kann die Partikelgröße mittels Grindometer nach DIN EN ISO 1524, insbesondere nach DIN EN ISO 1524:2013-06, bestimmt werden. Dabei bezieht sich die Partikelgröße der Füllstoffe insbesondere auf die maximale Agglomeratgröße in der Dispersionsfarbe. Ferner kann die Partikelgröße, insbesondere die Partikelgrößenverteilung, auch mittels Transmissionselektronenmikroskopie bestimmt werden.

Bevorzugt wird die Partikelgröße mittels Grindometer nach DIN EN ISO 1524:2013-06 bestimmt

Der pH Wert der Dispersionsfarbe beträgt erfindungsgemäß von 10 bis 12, bevorzugt von 10,5 bis 11,5. Es wurde gefunden, dass Dispersionsfarben mit den angegebenen pH Werten auch bei einer Lagerung über mehrere Wochen keine oder nur geringfügige Veränderungen aufweisen, selbst wenn sie im Wesentlichen frei von Konservierungsmitteln waren. "Im Wesentlichen frei von Konservierungsmitteln" bedeutet dabei, dass die Dispersionsfarbe Konservierungsmittel höchstens in Spuren, insbesondere in einer Menge von weniger als 2 ppm enthält. Noch weiter bevorzugt beträgt der pH Wert der Dispersionsfarbe von 10,5 bis 11,4. Erfindungsgemäße Dispersionsfarben mit derartigen pH Werten haben den zusätzlichen Vorteil, auch ohne besondere Vorkehrungen hinsichtlich des Arbeitsschutzes verwendet werden zu können.

Der pH Wert kann beispielsweise durch Zugabe von alkalischen Substanzen, auch Alkalisteller genannt, genauer eingestellt werden. Beispiele für alkalische Substanzen sind Alkalimetallhydroxide wie Litihium-, Natrium- und/oder Kaliumhydroxid, Erdalkalimetallhydroxide wie Magnesium-, Calcium-, und/oder Bariumhydroxid, Ammoniumhydroxid, Xonotlit (6CaO·6SiO₂·H₂O) und/oder Ettringit (Ca₆[Al(OH)₆]₂(SO₄ × 26 H₂O)). Bevorzugt ist der Alkalisteller ein Alkalimetallhydroxid, insbesondere Kaliumhydroxid.

Das Xonotlit weist vorzugsweise ein monoklines Kristallsystem auf (Xonotlitmonoklin). Es hat sich gezeigt, dass Xonotlit und/oder Ettringit in besonders vorteilhafter Weise in Kombination mit dem in der erfindungsgemäßen Dispersionsfarbe enthaltenen Alkanolamin eingesetzt werden können. Insbesondere weisen Dispersionsfarben, die neben Alkanolamin Xonotlit und/oder Ettringit als Alkalisteller enthalten, eine erhöhte pH-Stabilität auf.

Gemäß einer Ausführungsform der Erfindung enthält die erfindungsgemäße Dispersionsfarbe neben Alkanolamin mindestens einen Alkalisteller in einer Menge von 0,005 bis 3 Gew.%, insbesondere von 0,01 bis 1 Gew.%, bezogen auf die Gesamtzusammensetzung der Dispersionsfarbe. Insbesondere kann die erfindungsgemäße Dispersionsfarbe 0,005 bis 3 Gew.%, insbesondere von 0,01 bis 1 Gew.%, Kaliumhydroxid, Xonotlit und/oder Ettringit, bezogen auf die Gesamtzusammensetzung der Dispersionsfarbe, enthalten.

Erfindungsgemäß bleibt der pH Wert der erfindungsgemäßen Dispersionsfarbe im verschlossenen Behälter bei 22°C über einen Zeitraum von mindestens 4 Wochen, bevorzugt mindestens 8 Wochen, weiter bevorzugt mindestens 12 Wochen, noch weiter bevorzugt mindestens 16 Wochen, noch weiter bevorzugt mindestens 20 Wochen, im Wesentlichen konstant. "Im Wesentlichen konstant" bedeutet dabei, dass sich der gemessene pH Wert im Rahmen des bei Messungen des pH Werts üblichen Messtoleranzbereichs nicht ändert.

Erfindungsgemäß enthält die Dispersionsfarbe 1 bis 25 Gew.-% Polymer, bezogen auf das Gesamtgewicht der Dispersionsfarbe. Bevorzugt enthält die Dispersionsfarbe 1 bis 20 Gew.-%, weiter bevorzugt 5 bis 15 Gew.-%, Polymer jeweils bezogen auf das Gesamtgewicht der Dispersionsfarbe. Die Angaben bezüglich des Gehalts an Polymer in der Dispersionsfarbe beziehen sich jeweils auf das Polymer als Feststoffanteil. Bevorzugt wird das Polymer bei der Herstellung einer Dispersionsfarbe jedoch in Form einer Dispersion, insbesondere einer wässrigen Dispersion, zugegeben.

Vorteilhafterweise enthalten diese Polymerdispersionen, insbesondere die wässrigen Polymerdispersionen, 40 bis 70 Gew.-%, bevorzugt 45 bis 60 Gew.-%, weiter bevorzugt 45 bis 55 Gew.-%, Polymer. Wird das Polymer als wässrige Polymerdispersion zugegeben, wird das Wasser der Polymerdispersion als Teil des gesamten Wassergehalts der Dispersionsfarbe gerechnet. Dispersionsfarben enthaltend Polymer in den angegebenen Mengen haben gute Verarbeitungseigenschaften gezeigt.

Als Polymer der Dispersionsfarbe kommen verschiedene Polymere in Frage. Bevorzugt enthält das Polymer der erfindungsgemäßen Dispersionsfarbe mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester. Weiter bevorzugt enthält das Polymer der Dispersionsfarbe mindestens ein Polymer auf Basis von Acrylsäurederivaten und/oder Styrol, besonders bevorzugt ein Styrolacrylat-Copolymer. Bevorzugte Acrylsäurederivate sind Acrylsäureester. Bevorzugte Methacrylsäurederivate sind Methacrylsäureester. Bei Verwendung von Acrylsäureestern und/oder Methacrylsäureestern ist es bevorzugt, dass der Alkoholrest 1 bis 12 Kohlenstoffatome enthält. Der Alkoholrest kann ferner verzweigt oder unverzweigt sein. Gemäß einer bevorzugten Ausführungsform besteht das Polymer der Dispersionsfarbe aus mindestens einem der vorgenannten Polymere und/oder Copolymere.

Die erfindungsgemäße Dispersionsfarbe kann zudem Additive enthalten. Vorzugsweise enthält die Dispersionsfarbe 0,01 bis 5 Gew.-%, bevorzugt 0,05 bis 3 Gew.-%, weiter bevorzugt 0,1 bis 2 Gew.-%, jeweils bezogen auf das Gesamtgewicht der Dispersionsfarbe, Additive. Als Additive kommen beispielsweise Dispergier-, Netz-, Verdickungsmittel, Entschäumer und/oder Hydrophobierungsmittel in Frage.

Beispiele für Verdickungsmittel sind Alkoholalkoxylate, Ethylenoxid-Propylenoxid-Copolymere, Maleinsäureanhydrid-Diisobutylen-Copolymere, Polyacryl- und Polymethacrylsäure und deren Salze, Methylcellulosen, Carboxymethylcellulosen, Hydroxymethylcellulosen, Methylhydroxyethylcellulose, Polyurethane, Alkalimetallphosphate, Xanthangummi und Salze modifizierter Phosphorsäuren, sowie deren Mischungen.

Beispiele für Entschäumer sind Polyglykole, Triglyceride, Polysiloxan-Polyether-Copolymere und Silikonöle.

Beispiele für Hydrophobiermittel sind insbesondere oligomere und polymere Siloxane und Silikonharze.

Die erfindungsgemäße Dispersionsfarbe ist im Wesentlichen frei von Konservierungsmitteln. "Im Wesentlichen frei von Konservierungsmitteln" bedeutet dabei, dass die Dispersionsfarbe Konservierungsmittel höchstens in Spuren, insbesondere in einer Menge von weniger als 2 ppm enthält. Vorzugsweise ist die erfindungsgemäße Dispersionsfarbe frei von Bioziden, insbesondere von Isothiazolinen. Beispiele für Isothiazoline sind Methylisothiazolinon, Chlormethylisothiazolinon, Benzisothiazolinon, Octylisothiazolinon, Dichloroctylisothiazolinon und Butylbenzisothiazolinon. Vorzugsweise ist die Dispersionsfarbe frei von ([([(2-dihydro-5-methyl-3(2H)-oxazolyl)-1-methylethoxy] methoxy) methoxy] methanol.

Die Erfindung stellt ferner ein Verfahren zur Herstellung der erfindungsgemäßen Dispersionsfarbe bereit, umfassend die Schritte
a. Bereitstellen einer Zusammensetzung enthaltend, jeweils bezogen auf das Gesamtgewicht der Dispersionsfarbe,
   i. 0 bis 25 Gew.-% Pigment,
   ii. 20 bis 50 Gew.-% Füllstoff,
   iii. 1 bis 25 Gew.-% Polymer,
   iv. 0,01 bis 5 Gew.-% Alkanolamin,
   v. 25 bis 70 Gew.-% Wasser,
b. Dispergieren der in a. genannten Komponenten,
c. Einstellen des pH Wertes auf einen Wert von 10 bis 12.

Die angeführten Schritte können in beliebiger Reihenfolge fachspezifisch durchgeführt werden.

Das im Zusammenhang mit der erfindungsgemäßen Dispersionsfarbe zum Alkanolamin Gesagte gilt gleichermaßen auch für das Alkanolamin des erfindungsgemäßen Verfahrens.

Das im Zusammenhang mit der erfindungsgemäßen Dispersionsfarbe zur Menge an Pigment sowie zum Pigment Gesagte gilt gleichermaßen auch für die Menge an Pigment sowie das Pigment des erfindungsgemäßen Verfahrens.

Das im Zusammenhang mit der erfindungsgemäßen Dispersionsfarbe zu Füllstoff Gesagte gilt gleichermaßen auch für Füllstoff des erfindungsgemäßen Verfahrens.

Das im Zusammenhang mit der erfindungsgemäßen Dispersionsfarbe zum pH Wert sowie zur alkalischen Substanz Gesagte gilt gleichermaßen auch für den pH Wert sowie für die alkalische Substanz des erfindungsgemäßen Verfahrens.

Das im Zusammenhang mit der erfindungsgemäßen Dispersionsfarbe zur Menge an Polymer sowie zum Polymer Gesagte gilt gleichermaßen auch für die Menge an Polymer sowie das Polymer des erfindungsgemäßen Verfahrens.

Das im Zusammenhang mit der erfindungsgemäßen Dispersionsfarbe zu den Additiven Gesagte gilt gleichermaßen auch für die Additive des erfindungsgemäßen Verfahrens.

Die erfindungsgemäße Dispersionsfarbe ist für verschiedene Verwendungen geeignet. Insbesondere eignet sie sich für die Verwendung im Innen- und/oder Außenbereich.

Die Erfindung wird im Folgenden durch Beispiele näher erläutert, die jedoch nur der Veranschaulichung dienen und nicht limitierend sind.

### BEISPIELE

Eine Dispersionsfarbe mit der folgenden, in Tabelle 1 wiedergegebenen Formulierung wurde hergestellt durch Mischen der in Tabelle 1 angegebenen Bestandteile, dosierte Angaben jeweils in Gew.-%.

**Tabelle 1**

| **Bestandteil** | **Formulierung A** |
|---|---|
| Titandioxid | 13 |
| Styrolacrylat (50 Gew.-% in Wasser) | 15 |
| 2-(n-Butylamino)ethanol | 0,9 |
| Styrol-Acrylat als Polymerfüllstoff | 3 |
| Kieselgur | 3 |
| Calciumcarbonat | 19 |
| Kaolin | 8 |
| Alkalische Verbindung | 0,2 |
| Entschäumer | 0,4 |
| Verdicker | 0,5 |
| Netzmittel | 1 |
| Wasser | 36 |
| pH Wert | 11,3 |

Die Formulierung A zeigte eine Lagerstabilität von mehr als 6 Monaten ohne Verfärbungen und ließen sich gut verarbeiten. Insbesondere zeigte die Formulierung eine gute Verarbeitbarkeit und ergab nach dem Auftragen Oberflächen mit einem homogenen Gesamteindruck. Der pH Wert betrug für Formulierung A nach 6 Monaten 10,7. Auch bei Lagerung der Formulierung A in einem Ofen bei 50°C lag der pH Wert nach 35 Tagen noch bei 10,7.

## Patentansprüche

1. Dispersionsfarbe enthaltend, jeweils bezogen auf das Gesamtgewicht der Dispersionsfarbe,
a. 0 bis 25 Gew.-% Pigment,
b. 20 bis 50 Gew.-% Füllstoff,
c. 1 bis 25 Gew.-% Polymer,
d. 0,01 bis 5 Gew.-% Alkanolamin,
e. 25 bis 70 Gew.-% Wasser,
wobei der pH Wert der Dispersionsfarbe von 10 bis 12 beträgt, wobei die Dispersionsfarbe im Wesentlichen frei von Konservierungsmitteln ist und wobei der pH Wert der Dispersionsfarbe im verschlossenen Behälter bei 22°C über einen Zeitraum von mindestens 4 Wochen im Wesentlichen konstant bleibt, und wobei die Dispersionsfarbe frei von Wasserglas ist.

2. Dispersionsfarbe nach Anspruch 1, **dadurch gekennzeichnet, dass** sie 0,05 bis 3 Gew.-%, insbesondere 0,1 bis 1,5 Gew.-%, jeweils bezogen auf das Gesamtgewicht der Dispersionsfarbe, Alkanolamin enthält.

3. Dispersionsfarbe nach Anspruch 1 oder 2, **dadurch gekennzeichnet, dass** das Alkanolamin eine Verbindung der Formel R¹R²N(CH₂)ₗ(CR³R⁴)ₘ(CH₂)ₙOH ist, wobei
R¹ und R² unabhängig voneinander H, ein Kohlenwasserstoffrest mit 1 bis 10 Kohlenstoffatomen oder HO(CH_{z})_{z}- bedeuten,
R³ und R⁴ unabhängig voneinander H, OH oder C₁-C₅-Alkyl bedeuten,
10 oder 1 ist,
m eine ganze Zahl von 1 bis 5 ist, und
n eine ganze Zahl von 1 bis 5 ist,
bevorzugt wobei
R¹ H oder Methyl und R² H, C₁-C₁₀-Alkyl oder HO(CH₂)₂- bedeuten,
R³ und R⁴ unabhängig voneinander H, OH oder Methyl bedeuten,
10 oder 1 ist,
m eine ganze Zahl von 1 bis 5 ist, und
n 1 ist,
weiter bevorzugt wobei
R¹ H oder Methyl und R² H, Methyl oder Butyl, insbesondere n-Butyl bedeuten,
R³ und R⁴ unabhängig voneinander H, OH oder Methyl bedeuten,
10 oder 1 ist,
m eine ganze Zahl von 1 bis 5 ist, und
n 1 ist.

4. Dispersionsfarbe nach einem der vorstehenden Ansprüche, **dadurch gekennzeichnet, dass** die Dispersionsfarbe 1 bis 25 Gew.-%, insbesondere 1 bis 20 Gew.-% oder 1 bis 15 Gew.-% oder 5 bis 15 Gew.-% Pigment enthält, jeweils bezogen auf das Gesamtgewicht der Dispersionsfarbe, insbesondere wobei das Pigment ausgewählt ist aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon, insbesondere dass das Pigment Titandioxid ist.

5. Dispersionsfarbe nach einem der vorstehenden Ansprüche, **dadurch gekennzeichnet, dass** der Füllstoff ausgewählt ist aus der Gruppe bestehend aus Dolomit, Bariumsulfat, Feldspat, Quarz, Calciumcarbonat, Glimmer, Kaolin, kalziniertes Kaolin, Talkum, Diatomeenerde und Mischungen davon.

6. Dispersionsfarbe nach einem der vorstehenden Ansprüche, **dadurch gekennzeichnet, dass** der Füllstoff eine Mischung aus mindestens Calciumcarbonat und kalziniertem Kaolin ist.

7. Dispersionsfarbe nach einem der vorstehenden Ansprüche, **dadurch gekennzeichnet, dass** der pH Wert der Dispersionsfarbe von 10,5 bis 11,5, insbesondere von 10,5 bis 11,4, beträgt.

8. Dispersionsfarbe nach einem der vorstehenden Ansprüche, **dadurch gekennzeichnet, dass** der pH Wert der Dispersionsfarbe im verschlossenen Behälter bei 22°C über einen Zeitraum von mindestens 8 Wochen, insbesondere mindestens 12 Wochen oder mindestens 16 Wochen oder mindestens 20 Wochen, im Wesentlichen konstant bleibt.

9. Dispersionsfarbe nach einem der vorstehenden Ansprüche, **dadurch gekennzeichnet, dass** die Dispersionsfarbe 1 bis 20 Gew.-%, insbesondere 5 bis **15** Gew.-%, Polymer enthält, jeweils bezogen auf das Gesamtgewicht der Dispersionsfarbe.

10. Dispersionsfarbe nach einem der vorstehenden Ansprüche, **dadurch gekennzeichnet, dass** Dispersionsfarbe nach einem der vorstehenden Ansprüche, **dadurch gekennzeichnet, dass** das Polymer mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester, enthält.

11. Dispersionsfarbe nach einem der vorstehenden Ansprüche, **dadurch gekennzeichnet, dass** die Dispersionsfarbe 0,01 bis 5 Gew.-%, insbesondere 0,05 bis 3 Gew.-% oder 0,1 bis 2 Gew.-%, jeweils bezogen auf das Gesamtgewicht der Dispersionsfarbe, Additive, insbesondere Dispergier-, Netz-, Verdickungsmittel, Entschäumer und/oder Hydrophobierungsmittel, enthält.

12. Verfahren zur Herstellung einer Dispersionsfarbe nach einem der Ansprüche 1 bis 11, umfassend
a. Bereitstellen einer Zusammensetzung enthaltend, jeweils bezogen auf das Gesamtgewicht der Zusammensetzung,
i. 0 bis 25 Gew.-% Pigment,
ii. 20 bis 50 Gew.-% Füllstoff,
iii. 1 bis 25 Gew.-% Polymer,
iv. 0,01 bis 5 Gew.-% Alkanolamin,
v. 25 bis 70 Gew.-% Wasser,
b. Dispergieren der in a. genannten Komponenten,
c. Einstellen des pH Wertes auf einen Wert von 10 bis 12.

13. Verfahren nach Anspruch 12, **dadurch gekennzeichnet, dass** die Zusammensetzung 0,05 bis 3 Gew.-%, insbesondere 0,1 bis 1,5 Gew.-%, jeweils bezogen auf das Gesamtgewicht der Zusammensetzung, Akanolamin enthält und/oder dass das Alkanolamin gemäß Anspruch 3 definiert ist und/oder dass die Dispersionsfarbe 1 bis 25 Gew.-%, insbesondere 1 bis 20 Gew.-% oder 1 bis 15 Gew.-% oder 5 bis 15 Gew.-% Pigment enthält, jeweils bezogen auf das Gesamtgewicht der Dispersionsfarbe, wobei insbesondere das Pigment ausgewählt ist aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon und/oder dass der Füllstoff durch mindestens ein Merkmal der Ansprüche 5 und 6 charakterisiert ist und/oder dass der pH Wert der Dispersionsfarbe von 10,5 bis 11,5, insbesondere von 10,5 bis 11,4, beträgt und/oder dass der pH Wert der Dispersionsfarbe im verschlossenen Behälter bei 22°C über einen Zeitraum von mindestens 8 Wochen, insbesondere mindestens 12 Wochen oder mindestens 16 Wochen oder mindestens 20 Wochen, im Wesentlichen konstant bleibt und/oder dass die Zusammensetzung 1 bis 20 Gew.-%, insbesondere 5 bis 15 Gew.-%, Polymer enthält, jeweils bezogen auf das Gesamtgewicht der Zusammensetzung und/oder dass das Polymer mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester, enthält und/oder dass die Zusammensetzung 0,01 bis 5 Gew.-%, insbesondere 0,05 bis 3 Gew.-% oder 0,1 bis 2 Gew.-%, jeweils bezogen auf das Gesamtgewicht der Dispersionsfarbe, Additive, insbesondere Dispergier-, Netz-, Verdickungsmittel, Entschäumer und/oder Hydrophobierungsmittel, enthält.

14. Verwendung einer Dispersionsfarbe nach einem der Ansprüche 1 bis 11 für den Innen- und/oder Außenbereich.

## Claims

1. Emulsion paint containing, in each case based on the total weight of the emulsion paint,
a. 0 to 25 wt.% pigment,
b. 20 to 50 wt.% filler,
c. 1 to 25 wt.% polymer,
d. 0.01 to 5 wt.% alkanolamine,
e. 25 to 70 wt.% water,
wherein the pH of the emulsion paint is from 10 to 12, wherein the emulsion paint is substantially free of preservatives, and wherein the pH of the emulsion paint in the closed container remains substantially constant at 22°C over a period of at least 4 weeks, and wherein the dispersion paint is substantially free of water glass.

2. Emulsion paint according to claim 1, **characterized in that** it contains 0.05 to 3 wt.%, in particular 0.1 to 1.5 wt.%, alkanolamine, in each case based on the total weight of the emulsion paint.

3. Emulsion paint according to either claim 1 or claim 2, **characterized in that** the alkanolamine is a compound of the formula R¹R²N(CH₂)ₗ(CR³R⁴)ₘ(CH₂)ₙOH,
where
R¹ and R² independently represent H, a hydrocarbon residue having 1 to 10 carbon atoms or HO(CH₂)₂-,
R³ and R⁴ independently represent H, OH or C₁-C₅ alkyl,
I is 0 or 1,
m is an integer from 1 to 5, and
n is an integer from 1 to 5,
preferably where
R¹ represents H or methyl and R² represents H, C₁-C₁₀ alkyl or HO(CH₂)₂-
R³ and R⁴ independently represent H, OH or methyl,
I is 0 or 1,
m is an integer from 1 to 5, and
n is 1,
further preferably where
R¹ represents H or methyl and R² represents H, methyl or butyl, in particular n-butyl,
R³ and R⁴ independently represent H, OH or methyl,
I is 0 or 1,
m is an integer from 1 to 5, and
n is 1.

4. Emulsion paint according to any of the preceding claims, **characterized in that** the emulsion paint contains 1 to 25 wt.%, in particular 1 to 20 wt.% or 1 to 15 wt.% or 5 to 15 wt.% pigment, in each case based on the total weight of the emulsion paint, in particular the pigment being selected from the group consisting of titanium dioxide, iron oxide yellow, arylide (monoazo), bismuth vanadate, perinone, rutile tin zinc, quinacridone, diketopyrrolopyrrole, iron oxide red, phthalocyanine blue, dioxazine, cobalt blue, ultramarine blue, phthalocyanine green, chromium oxide green, cobalt green, carbon black, iron oxide black, pyrazolo-quinazoline, naphthol AS monoazo pigment and mixtures thereof, in particular **in that** the pigment is titanium dioxide.

5. Emulsion paint according to any of the preceding claims, **characterized in that** the filler is selected from the group consisting of dolomite, barium sulfate, feldspar, quartz, calcium carbonate, mica, kaolin, calcined kaolin, talc, diatomaceous earth, and mixtures thereof.

6. Emulsion paint according to any of the preceding claims, **characterized in that** the filler is a mixture of at least calcium carbonate and calcined kaolin.

7. Emulsion paint according to any of the preceding claims, **characterized in that** the pH of the emulsion paint is from 10.5 to 11.5, in particular from 10.5 to 11.4.

8. Emulsion paint according to any of the preceding claims,
**characterized in that** the pH of the emulsion paint in the closed container remains substantially constant at 22°C over a period of at least 8 weeks, in particular at least 12 weeks or at least 16 weeks or at least 20 weeks.

9. Emulsion paint according to any of the preceding claims,
**characterized in that** the emulsion paint contains 1 to 20 wt.%, in particular 5 to 15 wt.%, polymer, in each case based on the total weight of the emulsion paint.

10. Emulsion paint according to any of the preceding claims,
**characterized in that** the polymer contains at least one polymer and/or copolymer based on at least one monomer selected from the group consisting of acrylic acid, acrylic acid derivatives, acrylic acid esters, methacrylic acid, methacrylic acid derivatives, methacrylic acid esters, styrene, styrene derivatives, N-vinylpyrrolidone, acrylonitrile, vinyl acetate, vinyl propionate, ethylenically unsaturated carboxylic acids, ethylenically unsaturated carboxylic acid esters, ethylenically unsaturated carboxylic acid anhydrides, ethylenically unsaturated carboxylic acid amides and carboxylic acid vinyl esters.

11. Emulsion paint according to any of the preceding claims,
**characterized in that** the emulsion paint contains 0.01 to 5 wt.%, in particular 0.05 to 3 wt.% or 0.1 to 2 wt.%, additives, in particular dispersing, wetting, thickening, defoaming and/or hydrophobic agents, in each case based on the total weight of the emulsion paint.

12. Method for producing an emulsion paint according to any of claims 1 to 11, comprising
a. providing a composition containing, in each case based on the total weight of the composition,
i. 0 to 25 wt.% pigment,
ii. 20 to 50 wt.% filler,
iii. 1 to 25 wt.% polymer,
iv. 0.01 to 5 wt.% alkanolamine,
v. 25 to 70 wt.% water,
b. dispersing the components mentioned in a.,
c. adjusting the pH to a value from 10 to 12.

13. Method according to claim 12, **characterized in that** the composition contains 0.05 to 3 wt.%, in particular 0.1 to 1.5 wt.%, alkanolamine, in each case based on the total weight of the composition, and/or **in that** the alkanolamine is defined according to claim 3 and/or **in that** the emulsion paint contains 1 to 25 wt.%, in particular 1 to 20 wt.% or 1 to 15 wt.% or 5 to 15 wt.% pigment, in each case based on the total weight of the emulsion paint, in particular the pigment being selected from the group consisting of titanium dioxide, iron oxide yellow, arylide (monoazo), bismuth vanadate, perinone, rutile tin zinc, quinacridone, diketopyrrolopyrrole, iron oxide red, phthalocyanine blue, dioxazine, cobalt blue, ultramarine blue, phthalocyanine green, chromium oxide green, cobalt green, carbon black, iron oxide black, pyrazolo quinazoline, naphthol AS monoazo pigment and mixtures thereof and/or **in that** the filler is **characterized by** at least one feature of claims 5 and 6 and/or in that the pH of the emulsion paint is from 10.5 to 11.5, in particular from 10.5 to 11.4 and/or in that the pH of the emulsion paint in the closed container remains constant at 22°C over a period of at least 8 weeks, in particular at least 12 weeks or at least 16 weeks or at least 20 weeks, and/or in that the composition contains 1 to 20 wt.%, in particular 5 to 15 wt.%, polymer, in each case based on the total weight of the composition, and/or in that the polymer contains at least one polymer and/or copolymer based on at least one monomer selected from the group consisting of acrylic acid, acrylic acid derivatives, acrylic acid esters, methacrylic acid, methacrylic acid derivatives, methacrylic acid esters, styrene, styrene derivatives, N-vinylpyrrolidone, acrylonitrile, vinyl acetate, vinyl propionate, ethylenically unsaturated carbon acids, ethylenically unsaturated carbon acid esters, ethylenically unsaturated carbon acid anhydrides, ethylenically unsaturated carbon acid amides and carbon acid vinyl esters, and/or in that the composition contains 0.01 to 5 wt.%, in particular 0.05 to 3 wt.% or 0.1 to 2 wt.%, additives, in particular dispersing, wetting, thickening, defoaming and/or hydrophobic agents, in each case based on the total weight of the emulsion paint.

14. Use of an emulsion paint according to any of claims 1 to 11 for indoor and/or outdoor use.

## Revendications

1. Peinture à dispersion contenant, respectivement par rapport au poids total de la peinture à dispersion,
a. 0 à 25 % en poids de pigment,
b. 20 à 50 % en poids de charge,
c. 1 à 25 % en poids de polymère,
d. 0,01 à 5 % en poids d'alcanolamine,
e. 25 à 70 % en poids d'eau,
le pH de la peinture à dispersion étant de 10 à 12, la peinture à dispersion étant sensiblement exempte d'agents conservateurs et le pH de la peinture à dispersion restant sensiblement constant dans le récipient fermé à 22 °C sur une période d'au moins 4 semaines, et la peinture à dispersion étant sensiblement exempte de verre soluble.

2. Peinture à dispersion selon la revendication 1, **caractérisée en ce qu**'elle contient, respectivement par rapport au poids total de la peinture à dispersion, 0,05 à 3 % en poids, en particulier 0,1 à 1,5 % en poids d'alcanolamine.

3. Peinture à dispersion selon la revendication 1 ou 2, **caractérisée en ce que** l'alcanolamine est un composé de formule R¹R²N(CH₂)ₗ(CR³R⁴)ₘ(CH₂)ₙOH,
où
R¹ et R² représentent indépendamment l'un de l'autre H, un radical hydrocarboné comportant 1 à 10 atomes de carbone ou HO(CH₂)₂-,
R³ et R⁴ représentent indépendamment l'un de l'autre H, OH ou un alkyle en C₁-C₅,
l représente 0 ou 1,
m représente un nombre entier allant de 1 à 5, et
n représente un nombre entier allant de 1 à 5,
de préférence où
R¹ représente H ou méthyle et R² représente H, un alkyle en C₁-C₁₀ ou HO(CH₂)₂-,
R³ et R⁴ représentent indépendamment l'un de l'autre H, OH ou méthyle,
l représente 0 ou 1,
m représente un nombre entier allant de 1 à 5, et
n représente 1,
plus préférablement où
R¹ représente H ou méthyle et R² représente H, méthyle ou butyle, en particulier n-butyle,
R³ et R⁴ représentent indépendamment l'un de l'autre H, OH ou méthyle,
l représente 0 ou 1,
m représente un nombre entier allant de 1 à 5, et
n représente 1.

4. Peinture à dispersion selon l'une des revendications précédentes, **caractérisée en ce que** la peinture à dispersion contient, respectivement par rapport au poids total de la peinture à dispersion, 1 à 25 % en poids, en particulier 1 à 20 % en poids ou 1 à 15 % en poids ou 5 à 15 % en poids, de pigment, le pigment étant en particulier choisi dans le groupe constitué par le dioxyde de titane, oxyde de fer jaune, arylide (monoazoïque), vanadate de bismuth, périnones, rutile-étain-zinc, quinacridones, dicéto-pyrrolo-pyrrole, oxyde de fer rouge, bleu de phtalocyanine, dioxazine, bleu de cobalt, bleu outremer, vert de phtalocyanine, vert oxyde de chrome, vert de cobalt, noir de carbone, oxyde de fer noir, pyrazolo-quinazolone, pigment monoazoïque naphtol AS et leurs mélanges, en particulier **en ce que** le pigment est le dioxyde de titane.

5. Peinture à dispersion selon l'une des revendications précédentes, **caractérisée en ce que** la charge est choisie dans le groupe constitué par la dolomite, sulfate de baryum, feldspath, quartz, carbonate de calcium, mica, kaolin, kaolin calciné, talc, terre de diatomée et leurs mélanges.

6. Peinture à dispersion selon l'une des revendications précédentes, **caractérisée en ce que** la charge est un mélange d'au moins de carbonate de calcium et de kaolin calciné.

7. Peinture à dispersion selon l'une des revendications précédentes, **caractérisée en ce que** le pH de la peinture à dispersion est de 10,5 à 11,5, en particulier de 10,5 à 11,4.

8. Peinture à dispersion selon l'une des revendications précédentes, **caractérisée en ce que** le pH de la peinture à dispersion reste sensiblement constant dans le récipient fermé à 22 °C sur une période d'au moins 8 semaines, en particulier d'au moins 12 semaines ou d'au moins 16 semaines ou d'au moins 20 semaines.

9. Peinture à dispersion selon l'une des revendications précédentes, **caractérisée en ce que** la peinture à dispersion contient, respectivement par rapport au poids total de la peinture à dispersion, 1 à 20 % en poids, en particulier 5 à 15 % en poids, de polymère.

10. Peinture à dispersion selon l'une des revendications précédentes, **caractérisée en ce que** le polymère contient au moins un polymère et/ou un copolymère à base d'au moins un monomère choisi dans le groupe constitué par l'acide acrylique, dérivés d'acide acrylique, esters d'acide acrylique, acide méthacrylique, dérivés d'acide méthacrylique, esters d'acide méthacrylique, styrène, dérivés de styrène, N-vinylpyrrolidone, acrylonitrile, acétate de vinyle, propionate de vinyle, acides carboxyliques à insaturation éthylénique, esters d'acide carboxylique à insaturation éthylénique, anhydrides d'acide carboxylique à insaturation éthylénique, amides d'acide carboxylique à insaturation éthylénique et esters vinyliques d'acide carboxylique.

11. Peinture à dispersion selon l'une des revendications précédentes, **caractérisée en ce que** la peinture à dispersion contient, respectivement par rapport au poids total de la peinture à dispersion, 0,01 à 5 % en poids, en particulier 0,05 à 3 % en poids ou 0,1 à 2 % en poids d'additifs, en particulier d'agents dispersants, mouillants, épaississants, d'agents antimoussants et/ou d'agents hydrofuges.

12. Procédé de fabrication d'une peinture à dispersion selon l'une des revendications 1 à 11, comprenant
a. la fourniture d'une composition contenant, respectivement par rapport au poids total de la composition,
i. 0 à 25 % en poids de pigment,
ii. 20 à 50 % en poids de charge,
iii. 1 à 25 % en poids de polymère,
iv. 0,01 à 5 % en poids d'alcanolamine,
v. 25 à 70 % en poids d'eau,
b. la dispersion des constituants mentionnés à l'étape a.,
c. l'ajustement du pH à une valeur de 10 à 12.

13. Procédé selon la revendication 12, **caractérisé en ce que** la composition contient, respectivement par rapport au poids total de la composition, 0,05 à 3 % en poids, en particulier 0,1 à 1,5 % en poids, d'alcanolamine, et/ou **en ce que** l'alcanolamine est définie conformément à la revendication 3, et/ou **en ce que** la peinture à dispersion contient, respectivement par rapport au poids total de la peinture à dispersion, 1 à 25 % en poids, en particulier 1 à 20 % en poids ou 1 à 15 % en poids ou 5 à 15 % en poids, de pigment, le pigment étant en particulier choisi dans le groupe constitué par le dioxyde de titane, oxyde de fer jaune, arylide (monoazoïque), vanadate de bismuth, périnones, rutile-étain-zinc, quinacridones, dicéto-pyrrolo-pyrrole, oxyde de fer rouge, bleu de phtalocyanine, dioxazine, bleu de cobalt, bleu outremer, vert de phtalocyanine, vert oxyde de chrome, vert de cobalt, noir de carbone, oxyde de fer noir, pyrazolo-quinazolone, pigment monoazoïque naphtol AS et leurs mélanges, et/ou **en ce que** la charge est **caractérisée par** au moins une caractéristique des revendications 5 et 6, et/ou en ce que le pH de la peinture à dispersion est de 10,5 à 11,5, en particulier de 10,5 à 11,4, et/ou en ce que le pH de la peinture à dispersion reste sensiblement constant dans le récipient fermé à 22 °C sur une période d'au moins 8 semaines, en particulier d'au moins 12 semaines ou d'au moins 16 semaines ou d'au moins 20 semaines, et/ou en ce que la composition contient, respectivement par rapport au poids total de la composition, 1 à 20 % en poids, en particulier 5 à 15 % en poids, de polymère, et/ou en ce que le polymère contient au moins un polymère et/ou un copolymère à base d'au moins un monomère choisi dans le groupe constitué par l'acide acrylique, dérivés d'acide acrylique, esters d'acide acrylique, acide méthacrylique, dérivés d'acide méthacrylique, esters d'acide méthacrylique, styrène, dérivés de styrène, N-vinylpyrrolidone, acrylonitrile, acétate de vinyle, propionate de vinyle, acides carboxyliques à insaturation éthylénique, esters d'acide carboxylique à insaturation éthylénique, anhydrides d'acide carboxylique à insaturation éthylénique, amides d'acide carboxylique à insaturation éthylénique et esters vinyliques d'acide carboxylique, et/ou en ce que la composition contient, respectivement par rapport au poids total de la peinture à dispersion, 0,01 à 5 % en poids, en particulier 0,05 à 3 % en poids ou 0,1 à 2 % en poids, d'additifs, en particulier d'agents dispersants, mouillants, épaississants, d'agents antimoussants et/ou d'agents hydrofuges.

14. Utilisation d'une peinture à dispersion selon l'une des revendications 1 à 11 pour une zone intérieure et/ou extérieure.
